# EUROPEAN PATENT SPECIFICATION

(11) **EP 4 216 592 B1**
(45) Date of publication and mention of the grant of the patent: **08.07.2026**
(21) Application number: 23152705.2
(22) Date of filing: 20.01.2023
(51) Int. Cl.: H04W 16/10, H04W 74/0808, H04W 84/18

(54) **SPATIAL-REUSE CLASSIFICATION IN MESH NETWORK**
KLASSIFIZIERUNG DER RÄUMLICHEN WIEDERVERWENDUNG IN EINEM MESH-NETZWERK
CLASSIFICATION À RÉUTILISATION SPATIALE DANS UN RÉSEAU MAILLÉ

(30) Priority: 24.01.2022 US 202263302145 P; 18.01.2023 US 202318156060
(43) Date of publication of application: 26.07.2023
(73) Proprietor: MEDIATEK INC., Hsinchu City 30078 (TW)
(72) Inventor: FANG, Pochun, 30078 Hsinchu City (TW); LEE, Tsungjung, 30078 Hsinchu City (TW); LIN, Ray-Kuo, 30078 Hsinchu City (TW)
(74) Representative: Hoefer & Partner Patentanwälte mbB

(56) References cited:
- US-A1- 2017 188 376
- US-A1- 2019 021 091
- US-A1- 2022 007 196

## Description

### CROSS REFERENCE TO RELATED APPLICATIONS

This application claims the benefits of U.S. Provisional Application No. 63/302,145 filed on Jan. 24, 2022.

### BACKGROUND OF THE DISCLOSURE

### Field of the disclosure

The present invention relates to wireless-network communications, and, in particular, to a device and a method using spatial-reuse classification in a mesh network. In particular, the present invention relates to a device and a method according to the precharacterizing parts of the independent claims, respectively. Such a device and method are described in US 2019/021091 A1.

### Description of the Related Art

IEEE 802.11 is a set of media access control (MAC) and physical layer (PHY) specifications for implementing wireless local area network (WLAN) communication in the Wi-Fi (2.4, 3.6, 5, and 60 GHz) frequency bands. The 802.11 family consists of a series of half-duplex over-the-air modulation techniques that use the same basic protocol. The standards and amendments provide the basis for wireless network products using the Wi-Fi frequency bands. For example, IEEE 802.11ac is a wireless networking standard in the IEEE 802.11 family providing high-throughput WLANs on the 5 GHz band. Significant wider channel bandwidths (20 MHz, 40 MHz, 80 MHz, and 160 MHz) were proposed in the IEEE 802.11ac standard. The High Efficiency WLAN study group (HEW SG) is a study group within the IEEE 802.11 working group that will consider the improvement of spectrum efficiency to enhance the system throughput in high-density scenarios of wireless devices. Because of HEW SG, TGax (an IEEE task group) was formed and tasked to work on IEEE 802.11ax standard that will become a successor to IEEE 802.11ac. Recently, WLAN has seen exponential growth across organizations in many industries.

In IEEE 802.11ac WLAN systems, the transmitter of a BSS (basis service set) of certain bandwidth is allowed to transmit radio signals into the shared wireless medium depending on clear channel assessment (CCA) sensing and a deferral or backoff procedure for channel access contention. An enhanced distributed channel access protocol (EDCA) is used in IEEE 802.11ac as a channel contention procedure for wireless devices to gain access to the shared wireless medium, e.g., to obtain a transmitting opportunity (TXOP) for transmitting radio signals into the shared wireless medium. The basic assumption of EDCA is that a packet collision can occur if a device transmits signal under the channel busy condition when the received signal level is higher than the CCA level. This simple CSMA/CA with random back-off contention scheme and low-cost ad hoc deployment in an unlicensed spectrum have contributed to the rapid adoption of IEEE 802.11ac Wi-Fi systems.

BSS Coloring is a technique used to improve co-existence of overlapping BSSs (OBSS) and to allow spatial reuse (SR) within one channel. Wi-Fi 6 (IEEE 802.11ax) enables each AP radio to assign a value (from 1 to 63), known as the BSS color, to be included in the physical (PHY) header of all high-efficiency (HE) transmissions from devices in its BSS. With devices of each BSS transmitting a locally-unique color, a device can quickly and easily distinguish transmissions from its BSS or from devices in a neighboring BSS.

Today, Wi-Fi devices are over-populated. Dense deployment has led to significant issues such as interference, congestion, and low throughput. The spatial reuse technique introduced in the IEEE 802.11ax protocol may lead to a significant increase in the network throughput in some dense deployment scenarios because more simultaneous transmissions can happen in multiple overlapping BSSs (OBSSs). Although the spatial reuse feature in Wi-Fi 6 may help mitigate the co-channel interference in a mesh network, more usage of spatial reuse also introduces more collisions and interference into the mesh network. However, the spatial reuse feature in Wi-Fi 6 does not work in the mesh network. More specifically, the spatial reuse feature in Wi-Fi 6 only considers the AP-to-AP (access point to access point) RSSI (received signal strength indication) to adjust the power of the transmitter (i.e., Tx power), and it does not consider the SR SINR (signal-to-interference plus noise ratio) on an existing link between an access point and a station in the mesh network. This will cause a significant degradation on the SINR on the receiver of the existing link. In addition, internal traffic in the mesh network may have negative impact when some of the internal nodes are spatially reused by internal AP nodes in the mesh network. Moreover, there is no any mechanism in the Wi-Fi 6 protocol to coordinate SR behavior between AP nodes in the mesh network.

Accordingly, there is demand for a device and a method using spatial-reuse classification in a mesh network to solve the aforementioned problem.

### BRIEF SUMMARY OF THE DISCLOSURE

A device and a method according to the invention are defined in the independent claims. The dependent claims define preferred embodiments thereof. An embodiment of the present invention provides a device. The device includes a transceiver and a processor. The transceiver connects the device to one or more first stations and an access point, and the access point is connected to one or more second stations. The processor is coupled to the transceiver and is configured to provide spatial reuse classification information for the access point to determine whether to apply spatial use in a first PPDU sent from the access point to one of the second stations. The spatial reuse classification information is carried in a PHY preamble and the processor is configured to generate data rate information and SINR information of the one or more first stations to classify the one or more first stations and to provide the spatial reuse classification information based on the data rate information and the SINR information.

Another embodiment of the present invention provides a method. The method includes the following steps: forming a mesh network using a first access point, a second access point, one or more first stations, and one or more second stations, wherein the first access point is connected to the one or more first stations and the second access point, and the second access point is connected to the one or more second stations; and utilizing the first access point to provide spatial reuse classification information for the second access point to determine whether to apply spatial use in a first PPDU sent from the second access point to one of the second stations. The spatial reuse classification information is carried in a PHY preamble and the first access point is utilized to generate data rate information and SINR information of the one or more first stations to classify the one or more first stations and to provide the spatial reuse classification information based on the data rate information and the SINR information.

### BRIEF DESCRIPTION OF THE DRAWINGS

The present invention can be more fully understood by reading the subsequent detailed description and examples with references made to the accompanying drawings, wherein:
FIG. 1A is a diagram of a mesh network in accordance with an embodiment of the disclosure;
FIG. 1B is a block diagram of the access point AP1 in accordance with the embodiment of FIG. 1A;
FIGs. 2A-2B are diagrams of the PPDUs respectively sent by the access points AP1 and AP2 in accordance with the embodiment of FIG. 1A;
FIG. 3 is a diagram of a mesh network in accordance with another embodiment of the disclosure;
FIG. 4 is a diagram of a mesh network in accordance with yet another embodiment of the disclosure;
FIG. 5 is a diagram of a mesh network in accordance with yet another embodiment of the disclosure;
FIG. 6 is a block diagram of example communication devices in accordance with an implementation of the present disclosure; and
FIG. 7 is a flow chart of a method for spatial-reuse classification in a mesh network in accordance with an embodiment of the disclosure.

### DETAILED DESCRIPTION OF THE DISCLOSURE

The following description is made for the purpose of illustrating the general principles of the disclosure and should not be taken in a limiting sense. The scope of the disclosure is best determined by reference to the appended claims.

The following description is presented to enable one of ordinary skill in the art to make and use the invention, and is provided in the context of a patent application and its requirements. Various modifications to the embodiments and the generic principles and features described herein will be readily apparent to those skilled in the art. Thus, the present invention is not intended to be limited to the embodiments shown, but is to be accorded the widest scope consistent with the principles and features described herein.

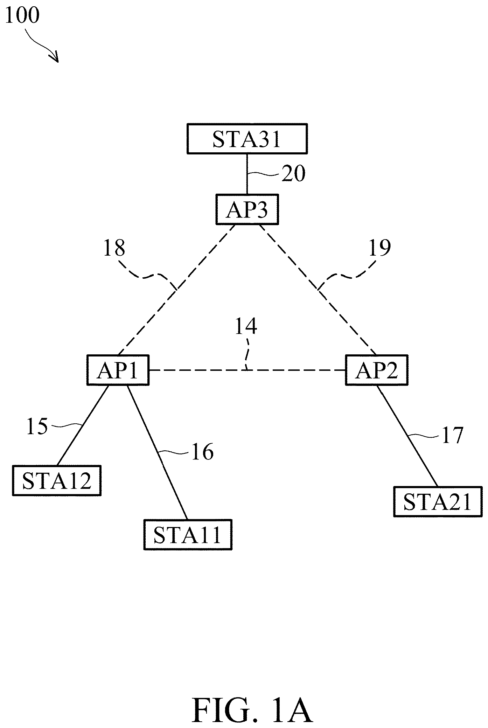

FIG. 1A is a diagram of a mesh network in accordance with an embodiment of the disclosure.

The mesh network 100 may include access points AP1, AP2 and AP3 and stations STA11, STA12, STA21 and STA31, wherein the access points AP1, AP2 and AP3 may be all or part of the access points that are located within the range of the mesh network 100. In addition, the access points AP1, AP2 and AP3 may be mesh AP nodes in the mesh network 100. Preferably, the access points AP1, AP2 and AP3 may include wireless routers, access points, laptops, desktop computers, smartphones, tablet PCs, etc. Preferably, the access point AP1 may be regarded as a controller device which is connected to a WAN (wide area network) port of a modem device (not shown in FIG. 1A) through a backhaul link. Although FIG. 1A shows three access points AP1, AP2 and AP3 and four stations STA11, STA12, STA21 and STA31, one of ordinary skill in the art will readily recognize that there could be any number of access points and stations, and such numbers would be within the scope of the disclosure.

More specifically, a mesh network allows nodes or access points to communicate directly with other nodes without being routed through a central switch point, e.g., a hub. Preferably, the access points AP1, AP2 and AP3 maintain the mesh network 100 by associating and authenticating new agent devices such as stations (STA), and by coordinating transmissions based on time and bandwidth requests by the agent device

As depicted in FIG. 1A, it is assumed that the access points AP1, AP2 and AP3 in the mesh network 100 may support IEEE 802.11ax (Wi-Fi 6) standard. Stations STA11 and STA12 are respectively connected to the access points AP1 through fronthaul links 15 and 16. The access point AP2 is connected to the access points AP1 through a Wi-Fi link 14, and the station STA21 is connected to the access points AP2 through a fronthaul link 17. The access point AP3 is connected to the access points AP1 through a Wi-Fi link 18, connected to the access points AP2 through a Wi-Fi link 19, and the station STA31 is connected to the access points AP3 through a fronthaul link 20. In this embodiment, the mesh network 100 can be considered as a dense network (i.e., a densely-deployed network), and the access points AP1, AP2 and AP3 may enable the spatial-reuse classification function in the mesh network 100, and the details of the spatial-reuse classification function will be described later.

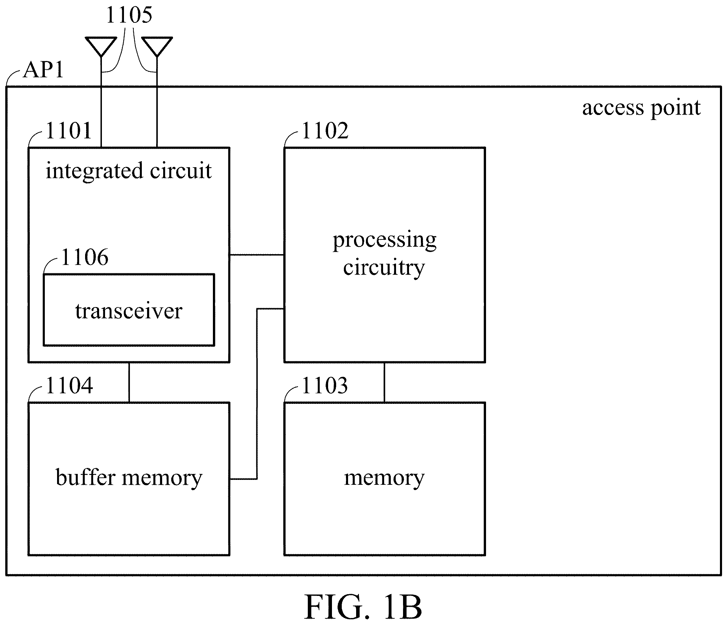

FIG. 1B is a block diagram of the access point AP1 in accordance with the embodiment of FIG. 1A.

The access points AP1 may include an integrated circuit 1101, processing circuitry 1102, a memory 1103, a buffer memory 1104, and at least one antenna 1105. The antennas 1105 may transmit and receive radio frequency (RF) signals. The integrated circuit 1101 is coupled to the antennas 1105, and the integrated circuit 1101 may include one or more transceivers 1106 which may receive RF signal from the antennas 1105, convert them to baseband signals, and send the baseband signals to the processing circuitry 1102. The transceivers 1106 may also convert the baseband signals from the processing circuitry 1102, convert them to RF signal, and send out the RF signals to antennas 1105. Preferably, the processing circuitry 1102 may be implemented by a central processing unit (CPU), a general-purpose processor, a digital signal processor (DSP), or a microcontroller, but the disclosure is not limited thereto.

Preferably, the integrated circuit 1101 may be a Wi-Fi chip, and the integrated circuit 1101 and the processing circuitry 1102 may be implemented by a system-on-chip (SoC), but the disclosure is not limited thereto. The memory 1103 may be a volatile memory or a non-volatile memory. For example, the volatile memory may be a static random access memory (SRAM) or a dynamic random access memory (DRAM), and the non-volatile memory may be a flash memory, a read-only memory (ROM), an erasable programmable read-only memory (EPROM), or an electrically erasable programmable read-only memory (EEPROM), but the disclosure is not limited thereto. In addition, the memory 1103 may store instructions or firmware that can be executed by the processing circuitry 1102 to control operations of the access point AP1. Preferably, components in the access points AP2 and AP3 may be similar to those in the access point AP1, and the details will not be repeated here.

### Spatial Reuse Classification Using Particular Field

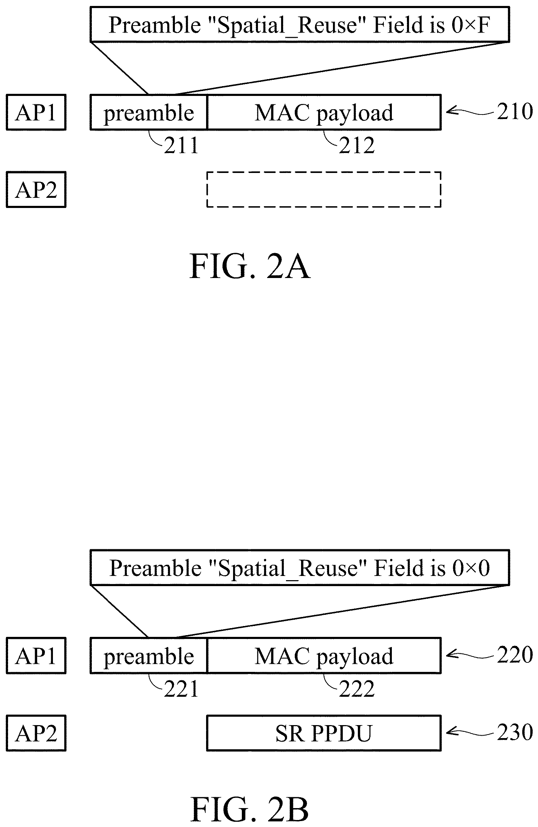

FIGs. 2A-2B are diagrams of the PPDUs respectively sent by the access points AP1 and AP2 in accordance with the embodiment of FIG. 1A. Please refer to FIG. 1A and FIGs. 2A-2B.

Preferably, the access points AP1 may inform other mesh AP nodes (e.g., access point AP2) whether the current PPDU (physical layer protocol data unit) sent by the access point AP1 is allowed to be spatially reused or not using a particular field in the current PPDU. For example, when the current PPDU is an HE (High Efficiency) PPDU or an EHT (Extremely High-Throughput) PPDU, the current PPDU may include a "Reserved" field and a 4-bit "Spatial_Reuse" field in the PHY (physical layer) preamble. Thus, a particular value in the "Reserved" field or the "Spatial_Reuse" field can be designed to notify whether the mesh PPDU can be spatially reused.

As depicted in FIG. 2A, the PPDU 210 sent from the access point AP1 to the station STA11 may include a preamble 211 and a MAC payload 212. The value in the "Spatial_Reuse" field in the preamble of the PPDU 210 may be 0xF in the hexadecimal format, and it represent that the PPDU 210 cannot be spatially reused by other mesh AP nodes (e.g., access point AP2) in the mesh network 100. For example, since the station STA11 is closer to the access point AP2 and is farther away from the associated access point AP1, the access points AP1 and AP2 can know that the SINR (signal-to-interference plus noise ratio) of the existing link between the access point AP1 and the station STA11 will be insufficient after the access points AP1 and AP2 exchange their RSSI measurement reports.

At this time, the access point AP1 will modify the value of the "Spatial_Reuse" field in the PHY preamble of the PPDU 210 to 0xF to represent that the PPDU 210 for the existing link between access point AP1 and the station STA11 cannot be spatially reused. The access point AP2 can detect that the value of the "Spatial_Reuse" field in the PHY preamble of the PPDU 210 sent by the access point AP1 is 0xF without decoding the MAC payload of the PPDU 210. Therefore, the access point AP2 will not send another PPDU to its associated station STA21 for spatial reuse.

As depicted in FIG. 2B, the PPDU 220 sent from the access point AP1 to the station STA12 may include a preamble 221 and a MAC payload 222. The value in the "Spatial_Reuse" field in the preamble of the PPDU 220 may be 0x0 in the hexadecimal format, and it represent that the PPDU 220 can be spatially reused by other mesh AP nodes (e.g., access point AP2) in the mesh network 100. For example, since the station STA12 is closer to the associated access point AP1 and is farther away from the access point AP2, the access points AP1 and AP2 can know that the SINR (signal-to-interference plus noise ratio) of the existing link between the access point AP1 and the station STA12 will be sufficient after the access points AP1 and AP2 exchange their RSSI measurement reports.

At this time, the access point AP1 will modify the value of the "Spatial_Reuse" field in the PHY preamble 221 of the PPDU 220 to 0x0 to represent that the PPDU 220 for the existing link between access point AP1 and the station STA12 can be spatially reused. The access point AP2 can detect that the value of the "Spatial_Reuse" field in the PHY preamble of the PPDU 220 sent by the access point AP1 is 0x0 without decoding the MAC payload of the PPDU 210. Therefore, the access point AP2 may then send another SR PPDU 230 to its associated station STA21 for spatial reuse.

In a similar manner, the "Reserved" field in the PHY preamble of the PPDU 210 or 220 can be used to indicate whether the PPDU 210 or 220 can be spatially reused by other access points. For example, the bit sequence combination of the "Reserved" field of the PPDU can be set using a undefined combination in the IEEE 802.11 standard to inform other access points whether spatial reuse on the PPDU is allowed or not.

### Spatial Reuse Classification Using BSS Color Groups

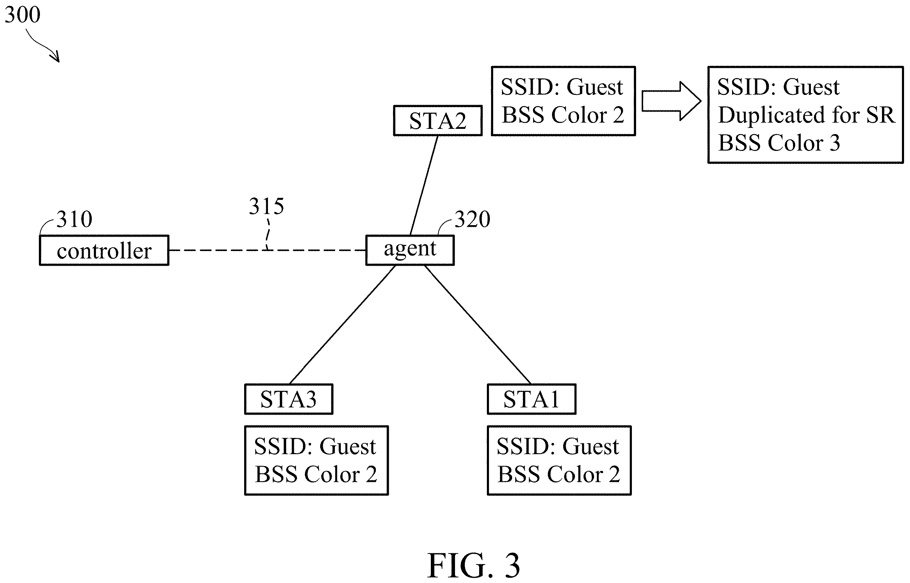

FIG. 3 is a diagram of a mesh network in accordance with another embodiment of the disclosure.

Preferably, the mesh network 300 may include a controller 310 and an agent 320, where the controller 310 and agent 320 may be access points. The controller 310 is connected to the agent 320 through a Wi-Fi link 315. In addition, the agent 320 is connected to stations STA1, STA2, and STA3 that are assigned to the basic service set BSS1 with the same SSID of "Guest" and a BSS color 2, as shown in FIG. 3.

The controller 310 may build a BSS-color black list according to the BSS color information (i.e., may be regarded as BSS group classification information) reported by the agent 320. When the value of a specific BSS color in the BSS-color black list is true, the controller 310 will not send a PPDU of the specific BSS color for spatial reuse. In this case, the agent 320 may report that the BSS color 2 is currently used, and thus the BSS-color black list built by the controller 310 can be illustrated by Table 1 as follows:

**Table 1**

| BSS Color Black List | |
|---|---|
| BSS Color | True |
| 2 | Yes |
| 3 | |

Each of the controller 310 and agent 320 in the mesh network 300 can create a duplicated BSS for each existing BSS with the same SSID (Service Set Identifier), the same password, and different BSS color or different BSSID (Basic Service Set Identifier). In this case, the agent 320 may duplicate the basic service set BSS1 with BSS color 2 to another basic service set BSS2 with BSS color 3. The agent 320 may steer the station STA2 with sufficient SR SINR to the basic service set BSS2.

Specifically, the agent 320 may build a table of the relationships between the SINR vs. Data Rate, which is shown in Table 2 as follows:

**Table 2**

| SINR vs. Data Rate Table | | | | | |
|---|---|---|---|---|---|
| Address | SR SINR | Acceptable Data Rate | Common Data Rate | Sufficient SINR after SR | Classified BSS Color |
| STA1 | 22dB | MCS7 | MCS10 | No | 2 |
| STA2 | 40dB | MCS11 | MCS11 | Yes | 3 |
| STA3 | 5dB | MCS1 | MCS9 | No | 2 |

In Table 2, the data rate MCS7~MCS11 can be referred to the IEEE 802.11 specification. The agent 320 may find that the station STA2 may have the highest SR SINR (e.g., 40dB), the highest acceptable data rate (e.g., MCS11), and the highest common data rate (e.g., MCS11). In addition, the station STA2 may also have sufficient SINR after spatial reuse. Thus, the agent 320 may steer the station STA2 from the basic service set BSS1 to another basic service set BSS2, where the basic service set BSS2 has the same SSID as the basic service set BSS1, but its BSS color (e.g., BSS color 3) is different from the BSS color (e.g., BSS color 2) of the basic service set BSS1. Therefore, after the station STA2 has been steered to the basic service set BSS2, when the agent 320 sends a first PPDU to the station STA2, the controller 310 can detect that the BSS color indicated by the first PPDU may represent that the first PPDU can be spatially reused, and the controller 310 may then send a second PPDU to its associated station following the first PPDU, thereby achieving spatial reuse.

### Spatial Reuse Classification Using Classified Bands

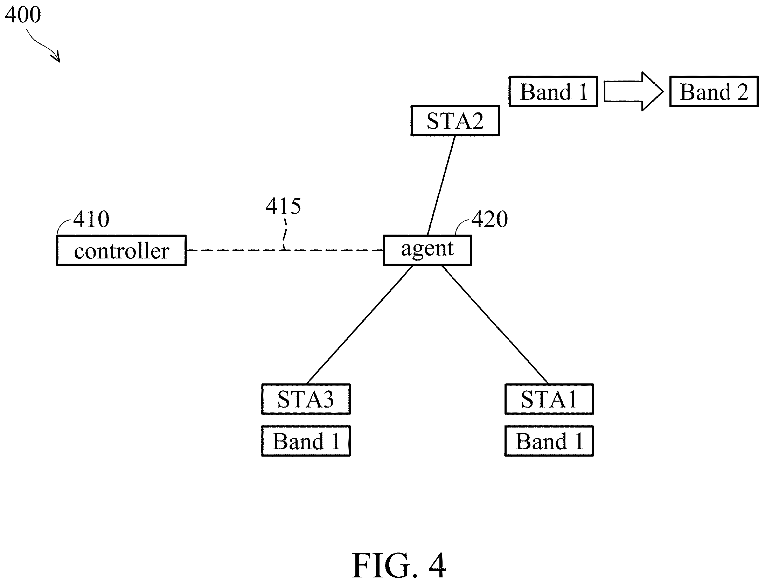

FIG. 4 is a diagram of a mesh network in accordance with yet another embodiment of the disclosure.

Preferably, the mesh network 400 may include a controller 410 and an agent 420, where the controller 410 and agent 420 may be access points as described in the embodiment of FIG. 1A. The controller 410 is connected to the agent 420 through a Wi-Fi link 415. In addition, the controller 410 and the agent 420 are operating on multiple frequency bands such as Band 1 and Band 2, and it is connected to stations STA1, STA2, and STA3 that are assigned to band 1, as shown in FIG. 4.

The controller 410 may build a band SR black list according to the band information (e.g., band groups) reported by the agent 420. When the value of a specific band in the band SR black list is true, the controller 410 will not send a PPDU of the specific band for spatial reuse. In this case, the agent 420 may report that the Band 1 is currently used, and thus the band SR black list built by the controller 410 can be illustrated by Table 3 as follows:

**Table 3**

| Band SR Black List | |
|---|---|
| Band | True |
| 1 | Yes |
| 2 | |

The agent 420 may build a table of the relationships between the SINR vs. Data Rate, which is shown in Table 4 as follows:

**Table 4**

| SINR vs. Data Rate Table | | | | | |
|---|---|---|---|---|---|
| Address | SR SINR | Acceptable Data Rate | Common Data Rate | Sufficient SINR after SR | Classified Band |
| STA1 | 22dB | MCS7 | MCS10 | No | Band 1 |
| STA2 | 40dB | MCS11 | MCS11 | Yes | Band 2 |
| STA3 | 5dB | MCS1 | MCS9 | No | Band 1 |

In Table 4, the data rate MCS7~MCS11 can be referred to the IEEE 802.11 specification. The agent 420 may find that the station STA2 may have the highest SR SINR (e.g., 40dB), the highest acceptable data rate (e.g., MCS11), and the highest common data rate (e.g., MCS11). In addition, the station STA2 may also have sufficient SINR after spatial reuse. Thus, the agent 420 may steer the station STA2 from the Band 1 (i.e., a band group that does not allow spatial reuse) to Band 2 (i.e., another band group that allows spatial reuse). Therefore, after the station STA2 has been steered to Band 2, when the agent 420 sends a first PPDU to the station STA2 using band 2, the controller 410 can detect that the band information indicated by the first PPDU may represent that the first PPDU can be spatially reused, and the controller may then send a second PPDU to its associated station following the first PPDU, thereby achieving spatial reuse. Moreover, the agent 420 may keep its associated STAs having sufficient SINR in Band 1, and steer its associated STAs having insufficient SINR to Band 2.

### Spatial Reuse Classification Using AID Information

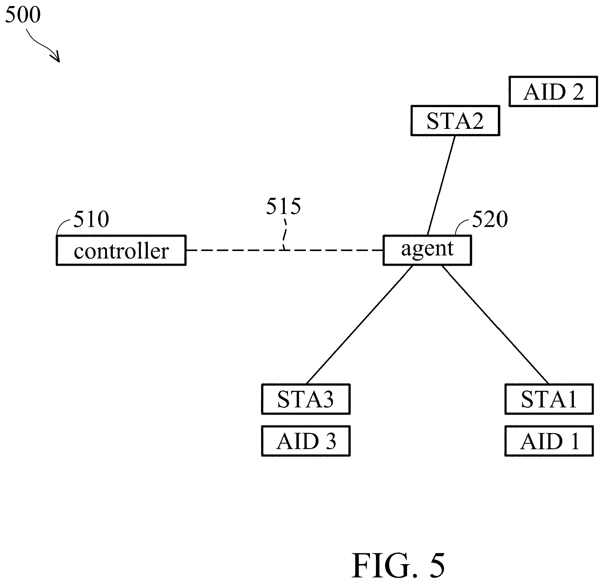

FIG. 5 is a diagram of a mesh network in accordance with yet another embodiment of the disclosure.

Preferably, the mesh network 500 may include a controller 510 and an agent 520, where the controller 510 and agent 520 may be access points as described in the embodiment of FIG. 1A. The controller 510 is connected to the agent 520 through a Wi-Fi link 515. In addition, the agent 520 is connected to stations STA1, STA2, and STA3 that are respectively corresponding to associated identifiers AID1, AID2, and AID3, as shown in FIG. 5. For example, any time a station associates with an AP, the station receives an AID. The AP uses this AID to keep track of the stations that are associated and belong to the members of the BSS.

The controller 510 may build an AID SR black list according to the AID information reported by the agent 520. When the value of a specific AID in the AID SR black list is true, the controller 510 will not send a PPDU of the specific AID for spatial reuse. In this case, the agent 520 may report that the associated identifiers AID1 and AID3 are currently used, and thus the AID SR black list built by the controller 510 can be illustrated by Table 5 as follows:

**Table 5**

| AID SR Black List | |
|---|---|
| AID | True |
| 1 | Yes |
| 2 | |
| 3 | Yes |

It should be noted that the AID information only exist in the preamble of a VHT (Very High Throughput), HE (High Efficiency), and EHT (Extremely High Throughput) PPDU. The VHT PPDU is defined by the IEEE 802.11ac (Wi-Fi 5) standard, but the VHT PPDU merely includes partial AID which is not used in this embodiment. The HE PPDU is defined by the IEEE 802.11ax (Wi-Fi 6) standard. However, the AID information only exists in the HE-SIG-B field of the PPDU in the HE-MU (High Efficiency Multi-User) format. Therefore, when the AID classification method is applied to the HE stations, the agent 520 will send PPDUs in the MU format to its associated stations, even for a single user. With regard to the EHT PPDU, it can fully support the AID information. When all devices in the mesh network 500 support the IEEE 802.11be (Wi-Fi 7) standard, the controller 510 and the agent 520 can send EHT PPDUs to their associated stations.

In addition, the agent 520 may build a table of the relationships between the SINR vs. Data Rate, which is shown in Table 6 as follows:

**Table 6**

| SINR vs. Data Rate Table | | | | | |
|---|---|---|---|---|---|
| Address | SR SINR | Acceptable Data Rate | Common Data Rate | Sufficient SINR after SR | Classified AID |
| STA1 | 22dB | MCS7 | MCS10 | No | 1 |
| STA2 | 40dB | MCS11 | MCS11 | Yes | 2 |
| STA3 | 5dB | MCS1 | MCS9 | No | 3 |

In Table 6, the data rate MCS7~MCS11 can be referred to the IEEE 802.11 specification. The agent 520 may find that the station STA2 may have the highest SR SINR (e.g., 40dB), the highest acceptable data rate (e.g., MCS11), and the highest common data rate (e.g., MCS11). In addition, the station STA2 may also have sufficient SINR after spatial reuse. Thus, the controller 510 can monitor the AID in the preamble of the PPDU sent by the agent 520 to known which station this PPDU is sent to, and then determine whether to apply spatial reuse to another PPDU sent from the controller 510 to its associated stations without interfering existing link between the agent 520 and its associated station.

For example, when the agent 520 sends a first PPDU (e.g., may be in the HE or EHT format) to the station STA2, the controller 510 can detect that AID information indicated by the preamble of the first PPDU allows spatial reuse, and the controller 510 may then send a second PPDU to its associated station following the first PPDU, thereby achieving spatial reuse.

In view of the embodiments of FIGs. 2 to 5, an efficient methodology to classify whether or not a mesh internal PPDU is allowed for being spatially reused. For example, the access points in the mesh network does not need to periodically update classified result, and the determination for spatial reuse can be performed per PPDU. In addition, the access point, that is used to perform spatial reuse over an existing link, can easily obtain the spatial-reuse classification information from the PHY preamble of a PPDU on the existing link since it is easy to decode a PHY header in the preamble of a PPDU rather than to decode a MAC payload in the preamble of the PPDU.

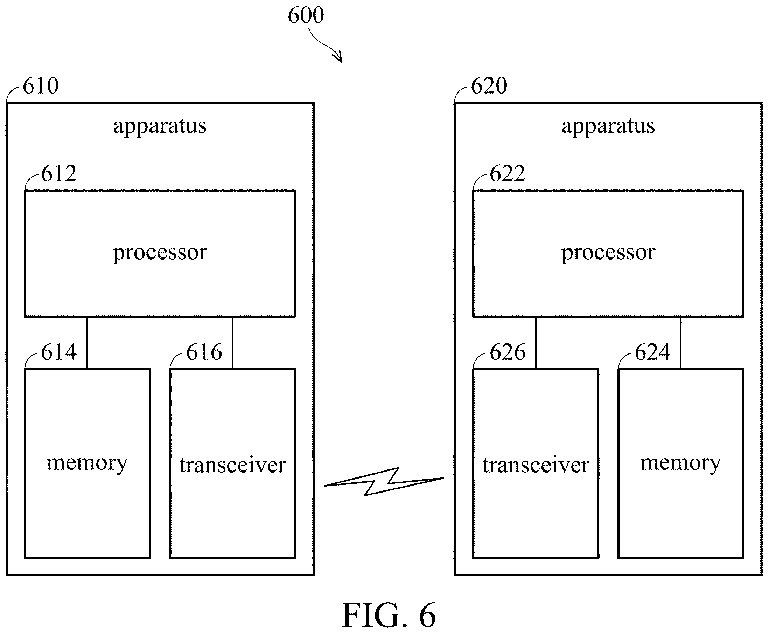

FIG. 6 is a block diagram of example communication devices in accordance with an implementation of the present disclosure.

In FIG. 6, the communication environment 600 includes an example device 610 and an example device 620 in accordance with an implementation of the present disclosure. Each of device 610 and device 620 may perform various functions to implement schemes, techniques, processes and methods described herein pertaining to spatial reuse classification in a mesh network, including various scheme described above in FIGs. 2 to 5.

Each of device 610 and device 620 may be a part of an electronic apparatus, which may be a portable or mobile apparatus, a wearable apparatus, a wireless communication apparatus or a computing apparatus. For instance, each of device 610 and device 620 may be implemented in an access point (AP), a repeater, a smartphone, a smartwatch, a personal digital assistant, a digital camera, or a computing equipment such as a tablet computer, a laptop computer or a notebook computer. Each of device 610 and device 620 may also be a part of a machine type apparatus, which may be an IoT or NB-IoT apparatus such as an immobile or a stationary apparatus, a home apparatus, a wire communication apparatus or a computing apparatus. For instance, each of device 610 and device 620 may be implemented in a smart thermostat, a smart fridge, a smart door lock, a wireless speaker or a home control center. Alternatively, each of device 610 and device 620 may be implemented in the form of one or more integrated-circuit (IC) chips such as, for example and without limitation, one or more single-core processors, one or more multi-core processors, or one or more complex-instruction-set-computing (CISC) processors. Each of device 610 and device 620 may include at least some of those components shown in FIG. 6 such as a processor 612 and a processor 622, respectively. Each of device 610 and device 620 may further include one or more other components not pertinent to the proposed scheme of the present disclosure (e.g., internal power supply, display device and/or user interface device), and, thus, such component(s) of each of device 610 and device 620 are neither shown in FIG. 6 nor described below in the interest of simplicity and brevity.

In one aspect, each of processor 612 and processor 622 may be implemented in the form of one or more single-core processors, one or more multi-core processors, or one or more CISC processors. That is, even though a singular term "a processor" is used herein to refer to processor 612 and processor 622, each of processor 612 and processor 6522 may include multiple processors in some implementations and a single processor in other implementations in accordance with the present disclosure. In another aspect, each of processor 612 and processor 622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 612 and processor 622 is a special-purpose machine specifically designed, arranged and configured to perform specific tasks including implementation of performing cross-BSS non-triggered based spatial reuse in accordance with various implementations of the present disclosure.

In some implementations, device 610 may also include a transceiver 516 as a communication device coupled to processor 612 and configured to wirelessly transmit and receive data. In some implementations, device 610 may further include a memory 614 coupled to processor 612 and capable of being accessed by processor 612 and storing data therein. In some implementations, device 620 may also include a transceiver 626 as a communication device coupled to processor 622 and configured to wirelessly transmit and receive data. In some implementations, device 620 may further include a memory 624 coupled to processor 622 and capable of being accessed by processor 622 and storing data therein. Accordingly, device 610 and device 620 may wirelessly communicate with each other via transceiver 616 and transceiver 626, respectively.

To aid better understanding, the following description of the operations, functionalities and capabilities of each of device 610 and device 620 is provided in the context of device 610 acting as an access point (e.g., AP1, AP2, controller, and agent) and device 620 acting as a station (e.g., STA1, STA2, and STA3) of a mesh network (e.g., mesh network 200~500).

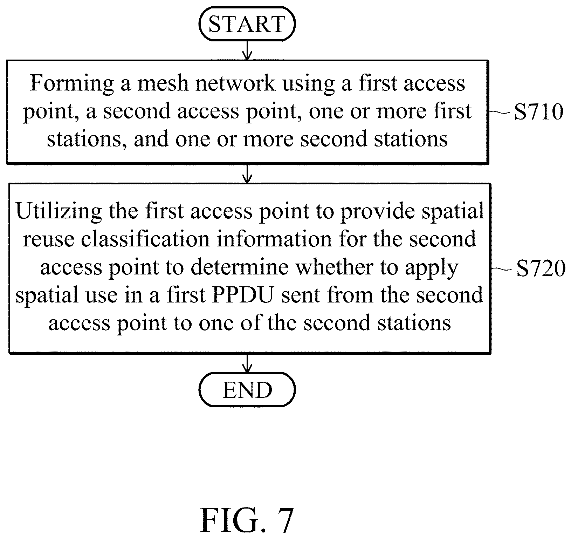

FIG. 7 is a flow chart of a method for spatial-reuse classification in a mesh network in accordance with an embodiment of the disclosure. Please refer to FIGs. 2~7.

Step S710: forming a mesh network using a first access point, a second access point, one or more first stations, and one or more second stations. For example, the first access point (e.g., controller) is connected to the one or more first stations and the second access point (e.g., agent). The second access point is connected to the one or more second stations (e.g., STA1-STA3).

Step S720: utilizing the first access point to provide spatial reuse classification information for the second access point to determine whether to apply spatial use in a first PPDU sent from the second access point to one of the second stations. For example, the spatial reuse classification information may be a particular field (e.g., "reserved" or "spatial_reuse" field of a PPDU, a BSS color information reported by the access point, band group classification information reported by the access point, or AID information reported by the access point.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

The steps described herein may be implemented using any suitable controller or processor, and software application, which may be stored on any suitable storage location or computer-readable medium. The software application provides instructions that enable the processor to cause the receiver to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any device that can contain, store, communicate, propagate, or transport the program for use by or in connection with the instruction execution system, device, or device.

The medium may be an electronic, magnetic, optical, electromagnetic, infrared, semiconductor system (or device or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk-read/write (CD-R/W).

## Claims

1. A device (610; 620), comprising:
a transceiver (616; 626), connecting the device (610; 620) to one or more first stations and an access point in a mesh network, wherein the access point is connected to one or more second stations; and
a processor (612; 622), coupled to the transceiver (616; 626) and configured to provide spatial reuse classification information for the access point to determine whether to apply spatial reuse
in a first PPDU sent from the access point to one of the second stations,
wherein the spatial reuse classification information is carried in a physical-layer, in the following also referred to as PHY, preamble;
**characterized in that** the processor is further configured to generate data rate information and signal-to-interference plus noise ratios, in the following also referred to as SINR, information of the one or more first stations to classify the one or more first stations and to provide the spatial reuse classification information based on the data rate information and the SINR information.

2. The device (610; 620) as claimed in claim 1, wherein the spatial reuse classification information is carried in a "spatial_reuse" field in the PHY preamble of a second physical layer protocol data unit, in the following also referred to as PPDU, sent from the device to one of the first stations, or wherein the spatial reuse classification information is carried in a "reserved" field in the PHY preamble of the second PPDU sent from the device to one of the first stations.

3. The device (610; 620) as claimed in claim 1 or 2, wherein the processor (612; 622) classifies the first stations into a plurality of basic service set, in the following also referred to as BSS, groups based on whether spatial reuse is allowed in each of the first stations, and obtains the spatial reuse classification information according to the classified BSS groups, wherein the processor (612; 622) duplicates a target BSS from one of a plurality of basic service sets of the first stations, and spatial reuse is allowed for the target basic service set, wherein after the processor (612; 622) steers one of the first stations to the target basic service set and transmits a second PPDU to the steered first station, the access point transmits the first PPDU to one of the second stations by applying spatial reuse on the second PPDU.

4. The device (610; 620) as claimed in claim 1 or 2, wherein the processor (612; 622) classifies the first stations into a plurality of band groups based on whether spatial reuse is allowed in each band currently used by the first stations, and obtains the spatial reuse classification information according to the classified band groups, wherein the processor (612; 622) selects a target band group from the band groups, and spatial reuse is allowed for the target band group, wherein after the processor (612; 622) steers one of the first stations to the target band group and transmits a second PPDU to the steered first station, the access point transmits the first PPDU to one of the second stations by applying spatial reuse on the second PPDU.

5. The device (610; 620) as claimed in any one of claims 1 to 4, wherein the spatial reuse classification information is carried in an associated identifier, in the following also referred to as AID, in the PHY preamble of a second PPDU sent from the device to one of the first stations, wherein the second PPDU is in an High Efficiency Multi-User, in the following also referred to as HE-MU, format or an Extremely High Throughput, in the following also referred to as EHT, format.

6. A method, comprising:
forming a mesh network using a plurality of access points, wherein the mesh network at least comprises a first access point and a second access point, and a plurality of stations at least comprising one or more first stations and one or more second stations (S710), and wherein the first access point is connected to the one or more first stations and the second access point, and the second access point is connected to the one or more second stations; and
utilizing the first access point to provide spatial reuse classification information for the second access point to determine whether to apply spatial reuse in a first PPDU sent from the second access point to one of the second stations (S720),
wherein the spatial reuse classification information is carried in a physical-layer, in the following also referred to as PHY, preamble;
**characterized by** utilizing the first access point to generate data rate information and signal-to-interference plus noise ratios, in the following also referred to as SINR, information of the one or more first stations to classify the one or more first stations and to provide the spatial reuse classification information based on the data rate information and the SINR information.

7. The method as claimed in claim 6, wherein the spatial reuse classification information is carried in a "spatial_reuse" field in the PHY preamble of a second physical layer protocol data unit, in the following also referred to as PPDU, sent from the device to one of the first stations.

8. The method as claimed in claim 6, wherein the spatial reuse classification information is carried in a "reserved" field in the PHY preamble of a second PPDU sent from the device to one of the first stations.

9. The method as claimed in any one of claims 6 to 8, further comprising:
classifying the first stations into a plurality of basic service set, in the following also referred to as BSS, groups based on whether spatial reuse is allowed in each of the first stations; and
obtaining the spatial reuse classification information according to the classified BSS groups.

10. The method as claimed in claim 9, further comprising:
utilizing the first access point to duplicate a target BSS from one of a plurality of basic service sets of the first stations, wherein spatial reuse is allowed for the target basic service set; and
after the first access point steers one of the first stations to the target basic service set and transmits a second PPDU to the steered first station, utilizing the second access point to transmit the first PPDU to one of the second stations by applying spatial reuse on the second PPDU.

11. The method as claimed in any one of claims 6 to 8, further comprising:
utilizing the first access point to classify the first stations into a plurality of band groups based on whether spatial reuse is allowed in each band currently used by the first stations, and to obtain the spatial reuse classification information according to the classified band groups.

12. The method as claimed in claim 11, further comprising:
utilizing the first access point to select a target band group from the band groups, wherein spatial reuse is allowed for the target band group; and
after the first access point steers one of the first stations to the target band group and transmits a second PPDU to the steered first station, the utilizing the second access point to transmit the first PPDU to one of the second stations by applying spatial reuse on the second PPDU.

13. The method as claimed in any one of claims 6 to 12, wherein the spatial reuse classification information is carried in an associated identifier, in the following also referred to as AID, in the PHY preamble of a second PPDU sent from the device to one of the first stations, wherein the second PPDU is in an High Efficiency Multi-User, in the following also referred to as HE-MU, format or an Extremely High Throughput, in the following also referred to as EHT, format.

## Patentansprüche

1. Vorrichtung (610; 620), umfassend:
einen Transceiver (616; 626), der die Vorrichtung (610; 620) mit einer oder mehreren ersten Stationen und einem Zugangspunkt in einem Maschennetz verbindet, wobei der Zugangspunkt mit einer oder mehreren zweiten Stationen verbunden ist; und
einen Prozessor (612; 622), der mit dem Transceiver (616; 626) gekoppelt ist und konfiguriert ist, um räumliche Wiederverwendungsklassifizierungsinformationen für den Zugangspunkt bereitzustellen, um zu bestimmen, ob eine räumliche Wiederverwendung in einer ersten PPDU angewendet werden soll, die von dem Zugangspunkt an eine der zweiten Stationen gesendet wird,
wobei die räumlichen Wiederverwendungsklassifizierungsinformationen in einer Präambel der physikalischen Schicht, im Folgenden auch als PHY bezeichnet, getragen werden;
**dadurch gekennzeichnet, dass** der Prozessor ferner konfiguriert ist, um Datenrateninformationen und Signal-zu-Interferenz-plus-Rauschen-Verhältnisse, im Folgenden auch als SINR bezeichnet, der einen oder mehreren ersten Stationen zu erzeugen, um die eine oder mehreren ersten Stationen zu klassifizieren und die räumlichen Wiederverwendungsklassifizierungsinformationen basierend auf den Datenrateninformationen und den SINR-Informationen bereitzustellen.

2. Vorrichtung (610; 620) nach Anspruch 1, wobei die räumlichen Wiederverwendungsklassifizierungsinformationen in einem Feld "räumliche Wiederverwendung" in der PHY-Präambel einer zweiten Protokolldateneinheit der physikalischen Schicht, im Folgenden auch als PPDU bezeichnet, getragen werden, die von der Vorrichtung an eine der ersten Stationen gesendet wird, oder wobei die räumlichen Wiederverwendungsklassifizierungsinformationen in einem Feld "reserviert" in der PHY-Präambel der zweiten PPDU getragen werden, die von der Vorrichtung an eine der ersten Stationen gesendet wird.

3. Vorrichtung (610; 620) nach Anspruch 1 oder 2, wobei der Prozessor (612; 622) die ersten Stationen in eine Vielzahl von Basisdienstsatzgruppen, im Folgenden auch als BSS bezeichnet, basierend darauf klassifiziert, ob eine räumliche Wiederverwendung in jeder der ersten Stationen erlaubt ist, und die räumlichen Wiederverwendungsklassifizierungsinformationen gemäß den klassifizierten BSS-Gruppen erhält, wobei der Prozessor (612; 622) eine Ziel-BSS aus einem einer Vielzahl von Basisdienstsätzen der ersten Stationen dupliziert und eine räumliche Wiederverwendung für den Ziel-Basisdienstsatz erlaubt ist, wobei, nachdem der Prozessor (612; 622) eine der ersten Stationen zu dem Ziel-Basisdienstsatz lenkt und eine zweite PPDU an die gelenkte erste Station sendet, der Zugangspunkt die erste PPDU an eine der zweiten Stationen durch Anwenden einer räumlichen Wiederverwendung auf die zweite PPDU sendet.

4. Vorrichtung (610; 620) nach Anspruch 1 oder 2, wobei der Prozessor (612; 622) die ersten Stationen in eine Vielzahl von Bandgruppen basierend darauf klassifiziert, ob eine räumliche Wiederverwendung in jedem Band erlaubt ist, das derzeit von den ersten Stationen verwendet wird, und die räumlichen Wiederverwendungsklassifizierungsinformationen gemäß den klassifizierten Bandgruppen erhält, wobei der Prozessor (612; 622) eine Zielbandgruppe aus den Bandgruppen auswählt und eine räumliche Wiederverwendung für die Zielbandgruppe erlaubt ist, wobei, nachdem der Prozessor (612; 622) eine der ersten Stationen zu der Zielbandgruppe lenkt und eine zweite PPDU an die gelenkte erste Station sendet, der Zugangspunkt die erste PPDU an eine der zweiten Stationen durch Anwenden einer räumlichen Wiederverwendung auf die zweite PPDU sendet.

5. Vorrichtung (610; 620) nach einem der Ansprüche 1 bis 4, wobei die räumlichen Wiederverwendungsklassifizierungsinformationen in einer assoziierten Kennung, im Folgenden auch als AID bezeichnet, in der PHY-Präambel einer zweiten PPDU getragen werden, die von der Vorrichtung an eine der ersten Stationen gesendet wird, wobei die zweite PPDU in einem Hocheffizienz-Mehrbenutzer-Format, im Folgenden auch als HE-MU bezeichnet, oder einem Format mit extrem hohem Durchsatz, im Folgenden auch als EHT bezeichnet, ist.

6. Verfahren, umfassend:
Bilden eines Maschennetzes unter Verwendung einer Vielzahl von Zugangspunkten, wobei das Maschennetz mindestens einen ersten Zugangspunkt und einen zweiten Zugangspunkt und eine Vielzahl von Stationen umfasst, die mindestens eine oder mehrere erste Stationen und eine oder mehrere zweite Stationen (S710) umfassen, und wobei der erste Zugangspunkt mit der einen oder den mehreren ersten Stationen und dem zweiten Zugangspunkt verbunden ist und der zweite Zugangspunkt mit der einen oder den mehreren zweiten Stationen verbunden ist; und
Verwenden des ersten Zugangspunkts, um räumliche Wiederverwendungsklassifizierungsinformationen für den zweiten Zugangspunkt bereitzustellen, um zu bestimmen, ob eine räumliche Wiederverwendung in einer ersten PPDU angewendet werden soll, die von dem zweiten Zugangspunkt an eine der zweiten Stationen gesendet wird (S720),
wobei die räumlichen Wiederverwendungsklassifizierungsinformationen in einer Präambel der physikalischen Schicht, im Folgenden auch als PHY bezeichnet, getragen werden;
**gekennzeichnet durch** Verwenden des ersten Zugangspunkts, um Datenrateninformationen und Signal-zu-Interferenz-plus-Rauschen-Verhältnisse, im Folgenden auch als SINR bezeichnet, der einen oder mehreren ersten Stationen zu erzeugen, um die eine oder mehreren ersten Stationen zu klassifizieren und die räumlichen Wiederverwendungsklassifizierungsinformationen basierend auf den Datenrateninformationen und den SINR-Informationen bereitzustellen.

7. Verfahren nach Anspruch 6, wobei die räumlichen Wiederverwendungsklassifizierungsinformationen in einem Feld "räumliche Wiederverwendung" in der PHY-Präambel einer zweiten Protokolldateneinheit der physikalischen Schicht, im Folgenden auch als PPDU bezeichnet, getragen werden, die von der Vorrichtung an eine der ersten Stationen gesendet wird.

8. Verfahren nach Anspruch 6, wobei die räumlichen Wiederverwendungsklassifizierungsinformationen in einem Feld "reserviert" in der PHY-Präambel einer zweiten PPDU getragen werden, die von der Vorrichtung an eine der ersten Stationen gesendet wird.

9. Verfahren nach einem der Ansprüche 6 bis 8, ferner umfassend:
Klassifizieren der ersten Stationen in eine Vielzahl von Basisdienstsatzgruppen, im Folgenden auch als BSS bezeichnet, basierend darauf, ob eine räumliche Wiederverwendung in jeder der ersten Stationen erlaubt ist; und
Erhalten der räumlichen Wiederverwendungsklassifizierungsinformationen gemäß den klassifizierten BSS-Gruppen.

10. Verfahren nach Anspruch 9, ferner umfassend:
Verwenden des ersten Zugangspunkts, um eine Ziel-BSS aus einem einer Vielzahl von Basisdienstsätzen der ersten Stationen zu duplizieren, wobei eine räumliche Wiederverwendung für den Ziel-Basisdienstsatz erlaubt ist; und
nachdem der erste Zugangspunkt eine der ersten Stationen zu dem Ziel-Basisdienstsatz lenkt und eine zweite PPDU an die gelenkte erste Station sendet, Verwenden des zweiten Zugangspunkts, um die erste PPDU an eine der zweiten Stationen durch Anwenden einer räumlichen Wiederverwendung auf die zweite PPDU zu senden.

11. Verfahren nach einem der Ansprüche 6 bis 8, ferner umfassend:
Verwenden des ersten Zugangspunkts, um die ersten Stationen in eine Vielzahl von Bandgruppen basierend darauf zu klassifizieren, ob eine räumliche Wiederverwendung in jedem Band erlaubt ist, das derzeit von den ersten Stationen verwendet wird, und die räumlichen Wiederverwendungsklassifizierungsinformationen gemäß den klassifizierten Bandgruppen zu erhalten.

12. Verfahren nach Anspruch 11, ferner umfassend:
Verwenden des ersten Zugangspunkts, um eine Zielbandgruppe aus den Bandgruppen auszuwählen, wobei eine räumliche Wiederverwendung für die Zielbandgruppe erlaubt ist; und
nachdem der erste Zugangspunkt eine der ersten Stationen zu der Zielbandgruppe lenkt und eine zweite PPDU an die gelenkte erste Station sendet, Verwenden des zweiten Zugangspunkts, um die erste PPDU an eine der zweiten Stationen durch Anwenden einer räumlichen Wiederverwendung auf die zweite PPDU zu senden.

13. Verfahren nach einem der Ansprüche 6 bis 12, wobei die räumlichen Wiederverwendungsklassifizierungsinformationen in einer assoziierten Kennung, im Folgenden auch als AID bezeichnet, in der PHY-Präambel einer zweiten PPDU getragen werden, die von der Vorrichtung an eine der ersten Stationen gesendet wird, wobei die zweite PPDU in einem Hocheffizienz-Mehrbenutzer-Format, im Folgenden auch als HE-MU bezeichnet, oder einem Format mit extrem hohem Durchsatz, im Folgenden auch als EHT bezeichnet, ist.

## Revendications

1. Dispositif (610 ; 620), comprenant :
un émetteur-récepteur (616 ; 626), connectant le dispositif (610 ; 620) à une ou plusieurs premières stations et à un point d'accès dans un réseau maillé, dans lequel le point d'accès est connecté à une ou plusieurs secondes stations ; et
un processeur (612 ; 622), couplé à l'émetteur-récepteur (616 ; 626) et configuré pour fournir des informations de classification de réutilisation spatiale pour le point d'accès afin de déterminer s'il faut appliquer une réutilisation spatiale dans une première PPDU envoyée par le point d'accès à l'une des secondes stations,
dans lequel les informations de classification de réutilisation spatiale sont transportées dans un préambule de couche physique, ci-après également appelée PHY ;
**caractérisé en ce que** le processeur est en outre configuré pour générer des informations de débit de données et des rapports signal sur interférence plus bruit, ci-après également appelés SINR, de la ou des premières stations afin de classer la ou les premières stations et de fournir les informations de classification de réutilisation spatiale sur la base des informations de débit de données et des informations SINR.

2. Dispositif (610 ; 620) selon la revendication 1, dans lequel les informations de classification de réutilisation spatiale sont transportées dans un champ « réutilisation spatiale » dans le préambule PHY d'une seconde unité de données de protocole de couche physique, ci-après également appelée PPDU, envoyée par le dispositif à l'une des premières stations, ou dans lequel les informations de classification de réutilisation spatiale sont transportées dans un champ « réservé » dans le préambule PHY de la seconde PPDU envoyée par le dispositif à l'une des premières stations.

3. Dispositif (610 ; 620) selon la revendication 1 ou 2, dans lequel le processeur (612 ; 622) classe les premières stations en une pluralité de groupes d'ensembles de services de base, ci-après également appelés BSS, sur la base du fait qu'une réutilisation spatiale est autorisée dans chacune des premières stations, et obtient les informations de classification de réutilisation spatiale en fonction des groupes BSS classés, dans lequel le processeur (612 ; 622) duplique un BSS cible à partir de l'un d'une pluralité d'ensembles de services de base des premières stations, et une réutilisation spatiale est autorisée pour l'ensemble de services de base cible, dans lequel après que le processeur (612 ; 622) dirige l'une des premières stations vers l'ensemble de services de base cible et transmet une seconde PPDU à la première station dirigée, le point d'accès transmet la première PPDU à l'une des secondes stations en appliquant une réutilisation spatiale sur la seconde PPDU.

4. Dispositif (610 ; 620) selon la revendication 1 ou 2, dans lequel le processeur (612 ; 622) classe les premières stations en une pluralité de groupes de bandes sur la base du fait qu'une réutilisation spatiale est autorisée dans chaque bande actuellement utilisée par les premières stations, et obtient les informations de classification de réutilisation spatiale en fonction des groupes de bandes classés, dans lequel le processeur (612 ; 622) sélectionne un groupe de bandes cible parmi les groupes de bandes, et une réutilisation spatiale est autorisée pour le groupe de bandes cible, dans lequel après que le processeur (612 ; 622) dirige l'une des premières stations vers le groupe de bandes cible et transmet une seconde PPDU à la première station dirigée, le point d'accès transmet la première PPDU à l'une des secondes stations en appliquant une réutilisation spatiale sur la seconde PPDU.

5. Dispositif (610 ; 620) selon l'une quelconque des revendications 1 à 4, dans lequel les informations de classification de réutilisation spatiale sont transportées dans un identifiant associé, ci-après également appelé AID, dans le préambule PHY d'une seconde PPDU envoyée par le dispositif à l'une des premières stations, dans lequel la seconde PPDU est dans un format multi-utilisateur à haut rendement, ci-après également appelé HE-MU, ou un format à débit extrêmement élevé, ci-après également appelé EHT.

6. Procédé, comprenant :
la formation d'un réseau maillé en utilisant une pluralité de points d'accès, dans lequel le réseau maillé comprend au moins un premier point d'accès et un second point d'accès, et une pluralité de stations comprenant au moins une ou plusieurs premières stations et une ou plusieurs secondes stations (S710), et dans lequel le premier point d'accès est connecté aux une ou plusieurs premières stations et au second point d'accès, et le second point d'accès est connecté aux une ou plusieurs secondes stations ; et
l'utilisation du premier point d'accès pour fournir des informations de classification de réutilisation spatiale pour le second point d'accès afin de déterminer s'il faut appliquer une réutilisation spatiale dans une première PPDU envoyée par le second point d'accès à l'une des secondes stations (S720),
dans lequel les informations de classification de réutilisation spatiale sont transportées dans un préambule de couche physique, ci-après également appelée PHY ;
**caractérisé par** l'utilisation du premier point d'accès pour générer des informations de débit de données et des rapports signal sur interférence plus bruit, ci-après également appelés SINR, de la ou des premières stations afin de classer la ou les premières stations et de fournir les informations de classification de réutilisation spatiale sur la base des informations de débit de données et des informations SINR.

7. Procédé selon la revendication 6, dans lequel les informations de classification de réutilisation spatiale sont transportées dans un champ « réutilisation spatiale » dans le préambule PHY d'une seconde unité de données de protocole de couche physique, ci-après également appelée PPDU, envoyée par le dispositif à l'une des premières stations.

8. Procédé selon la revendication 6, dans lequel les informations de classification de réutilisation spatiale sont transportées dans un champ « réservé » dans le préambule PHY d'une seconde PPDU envoyée par le dispositif à l'une des premières stations.

9. Procédé selon l'une quelconque des revendications 6 à 8, comprenant en outre :
la classification des premières stations en une pluralité de groupes d'ensembles de services de base, ci-après également appelés BSS, sur la base du fait qu'une réutilisation spatiale est autorisée dans chacune des premières stations ; et
l'obtention des informations de classification de réutilisation spatiale en fonction des groupes BSS classés.

10. Procédé selon la revendication 9, comprenant en outre :
l'utilisation du premier point d'accès pour dupliquer un BSS cible à partir de l'un d'une pluralité d'ensembles de services de base des premières stations, dans lequel une réutilisation spatiale est autorisée pour l'ensemble de services de base cible ; et
après que le premier point d'accès dirige l'une des premières stations vers l'ensemble de services de base cible et transmet une seconde PPDU à la première station dirigée, l'utilisation du second point d'accès pour transmettre la première PPDU à l'une des secondes stations en appliquant une réutilisation spatiale sur la seconde PPDU.

11. Procédé selon l'une quelconque des revendications 6 à 8, comprenant en outre :
l'utilisation du premier point d'accès pour classer les premières stations en une pluralité de groupes de bandes sur la base du fait qu'une réutilisation spatiale est autorisée dans chaque bande actuellement utilisée par les premières stations, et pour obtenir les informations de classification de réutilisation spatiale en fonction des groupes de bandes classés.

12. Procédé selon la revendication 11, comprenant en outre :
l'utilisation du premier point d'accès pour sélectionner un groupe de bandes cible parmi les groupes de bandes, dans lequel une réutilisation spatiale est autorisée pour le groupe de bandes cible ; et
après que le premier point d'accès dirige l'une des premières stations vers le groupe de bandes cible et transmet une seconde PPDU à la première station dirigée, l'utilisation du second point d'accès pour transmettre la première PPDU à l'une des secondes stations en appliquant une réutilisation spatiale sur la seconde PPDU.

13. Procédé selon l'une quelconque des revendications 6 à 12, dans lequel les informations de classification de réutilisation spatiale sont transportées dans un identifiant associé, ci-après également appelé AID, dans le préambule PHY d'une seconde PPDU envoyée par le dispositif à l'une des premières stations, dans lequel la seconde PPDU est dans un format multi-utilisateur à haut rendement, ci-après également appelé HE-MU, ou un format à débit extrêmement élevé, ci-après également appelé EHT.
